# EUROPÄISCHE PATENTSCHRIFT

(11) **EP 2 925 577 B1**
(45) Veröffentlichungstag und Bekanntmachung des Hinweises auf die Patenterteilung: **18.04.2018**
(21) Anmeldenummer: 13779132.3
(22) Anmeldetag: 04.10.2013
(51) Int. Cl.: B60T 13/26, B60T 13/68, B60T 15/18

(54) **VENTILANORDNUNG FÜR EIN ELEKTROPNEUMATISCHES BREMSSYSTEM**
VALVE ARRANGEMENT FOR AN ELECTROPNEUMATIC BRAKE SYSTEM
ENSEMBLE SOUPAPE POUR UN SYSTÈME DE FREINAGE ÉLECTROPNEUMATIQUE

(30) Priorität: 27.11.2012 DE 102012023137
(43) Veröffentlichungstag der Anmeldung: 07.10.2015
(73) Patentinhaber: WABCO GmbH, 30453 Hannover (DE)
(72) Erfinder: STENDER, Axel, 31787 Hameln (DE); VON DER BEEKE, Jan-Christoph, 38106 Braunschweig (DE)
(74) Vertreter: Lauerwald, Jörg
(86) Internationale Anmeldenummer: PCT/EP2013/002992
(87) Internationale Veröffentlichungsnummer: WO 2014/082693

(56) Entgegenhaltungen:
- DE-A1-102007 014 423
- DE-A1-102010 050 578
- US-B1- 7 517 026

## Beschreibung

Die Erfindung betrifft eine Ventilanordnung gemäß dem Oberbegriff des Anspruchs 1 sowie ein elektropneumatisches Bremssystem und ein Anhängefahrzeug.

Anhängefahrzeuge im Sinne der Erfindung sind insbesondere Sattelauflieger und Anhänger mit Deichsel. Diese weisen ein pneumatisches Bremssystem auf, welches zugleich elektronisch/elektrisch ansteuerbar ist und deshalb als elektropneumatisches oder elektronisches Bremssystem bezeichnet wird.

Beim An- und Abkuppeln von Anhängefahrzeugen an Zugfahrzeuge müssen üblicherweise für das Bremssystem mindestens drei Steckverbindungen gesteckt oder gelöst werden, nämlich der Stecker einer pneumatischen Leitung für den Bremsdruck, der Stecker einer pneumatischen Leitung für den Vorratsdruck und der Stecker für eine elektrische Verbindung bzw. Datenverbindung. Dieser Stecker wird vereinfachend auch als ABS-Stecker bezeichnet, weil die ein Antiblockiersystem betreffenden Daten und/oder Befehle darüber übertragen werden können.

Die im Anhängefahrzeug vorhandenen Betriebsbremsen werden von einem elektronischen Bremsensteuergerät im Anhängefahrzeug angesprochen. Die Betätigung eines Bremspedals durch den Fahrer des Zugfahrzeugs wird als elektronisches Signal an das Bremsensteuergerät übertragen. Mit letzterem wird der erforderliche Bremsdruck in Radbremszylinder der Betriebsbremsen eingesteuert. Parallel zu dieser Funktionalität sind sogenannte Parkbremsen vorgesehen. Es handelt sich dabei um Bremsen, die mit pneumatischen Federspeichern in Verbindung stehen und durch Entlüften der Federspeicher wirksam werden. Die Federspeicher sind zumindest mittelbar mit einem Druckluftvorrat des Anhängefahrzeugs oder mit der Vorratsleitung für die Druckluft verbunden. Bei ausreichendem Druck sind die Federspeicher belüftet und die Parkbremsen gelöst. Bei abfallendem Druck werden die Federspeicher entlüftet und die Parkbremsen wirken. Die Parkbremsen mit Federspeicher erfüllen demnach eine wichtige Sicherheitsfunktion.

Zur Sicherstellung der Funktion ist in einigen Ländern aufgrund gesetzlicher Vorschriften ein Anhängerbremsventil vorgesehen, welches eine automatische Bremsung im Fehlerfall ermöglichen soll. Ein Abreißen der Druckluftverbindung zwischen Zugfahrzeug und Anhängefahrzeug wird vom Anhängerbremsventil detektiert und löst eine Bremsung aus.

Zumindest zwei verschiedene Systeme zum Auslösen der Bremsung existieren in der Praxis. In einem System wird unterschieden zwischen dem Abriss der pneumatischen Verbindung vom Zugfahrzeug zum Anhängefahrzeug und dem Absinken des Vorratsdrucks im Anhängefahrzeug. Bei Abriss der pneumatischen Verbindung vom Zugfahrzeug zum Anhängefahrzeug wird eine automatische Bremsung mit Hilfe der Betriebsbremse ausgelöst. Im Falle eines unzulässigen Absinkens des Vorratsdrucks, wird die automatische Bremsung über die Federspeicher ausgelöst. In dem anderen System wird unabhängig von dem noch vorhandenen Druck sogleich eine automatische Bremsung durch Entlüften der Federspeicher ausgeführt.

Außerdem wird durch das Anhängerbremsventil eine Druckrückhaltung bei abgekuppeltem Anhängefahrzeug gewährleistet. Nach dem Abkuppeln sollen die Parkbremsen zwar betätigt, aber durch einen zurückgehaltenen Druckluftvorrat wieder lösbar sein.

Üblicherweise sind dem Anhängerbremsventil zwei manuelle Betätigungseinrichtungen zugeordnet, nämlich ein Betätigungsknopf zum Einlegen der Parkbremsen durch Entlüften der Federspeicher einerseits und ein Betätigungsknopf zum Lösen der Bremsen nach einer automatischen Bremsung, sofern ausreichender Vorratsdruck im Behälter des Anhängefahrzeugs vorhanden ist. Die Funktionen des Anhängerbremsventils und der genannten Betätigungsknöpfe können auch zusammengefasst sein in einem Anhängerbremsventil mit Parkbremsbedienung, welches auch als Park-Release-Emergency-Valve (PREV) bezeichnet wird.
Aufgrund der beschriebenen Funktion ist das Anhängefahrzeug nach dem Abkuppeln stets durch die Betriebsbremse oder die Federspeicher gebremst. Beim erneuten Ankuppeln ist es aus Sicherheitsgründen erforderlich, zur Vermeidung eines ungebremsten Zustands, eine bestimmte Reihenfolge beim Verbinden der Druckluftleitungen einzuhalten. Zunächst soll ein gelber Stecker für den Bremsdruck gesteckt werden, anschließend ein roter Stecker für den Druckluftvorrat. Wird die Ankuppelreihenfolge vertauscht, also erst der Druckluftvorrat angeschlossen und damit die Federspeicher belüftet und so die Parkbremsen gelöst, kann das Anhängefahrzeug wegrollen. Analog gilt dies für ein Vertauschen der Reihenfolge beim Lösen der Stecker zum Abkuppeln des Anhängefahrzeugs.

US 7,517,026 B1 offenbart eine Steuerungsschaltung für Bremsen eines Anhängefahrzeugs.

DE 10 2007 014 423 A1 offenbart eine Feststellbremsanlage für ein mit einem Anhänger pneumatisch koppelbares Nutzfahrzeug, mit einer Steuereinheit, die eine Steuerelektronik, zwei Ventileinrichtungen, einen mit einer Druckluftquelle koppelbaren Drucklufteingang, zwei Druckluftarbeitsausgänge und einen Entlüftungsausgang umfasst, wobei ein Relaisventil vorgesehen ist, das einen durch eine erste Ventileinrichtung der Steuereinheit zur Verfügung gestellten Steuerdruck empfängt und in Abhängigkeit des Steuerdruckes mindestens einen Federspeicherzylinder be- oder entlüftet, wobei eine Anhängerbremsanlage in Abhängigkeit eines von der zweiten Ventileinrichtung zur Verfügung gestellten und durch einen Drucksensor erfassbaren Steuerdruckes be- oder entlüftbar ist und wobei die zweite Ventileinrichtung in einem ersten Schaltzustand ohne Zwischenschaltung des Relaisventils mit dem Drucklufteingang der Steuereinheit gekoppelt ist.

Aufgabe der vorliegenden Erfindung ist die Schaffung einer Ventilanordnung, mit der die gewünschte Sicherheit beim An- und Abkuppeln gewährleistet ist und zugleich eine zusätzliche manuelle Betätigung möglichst vermieden werden kann. Das An- und Abkuppeln soll automatisch erkannt werden. Nach dem Abkuppeln soll das Anhängefahrzeug über die Federspeicher gebremst sein. Beim Ankuppelvorgang soll das Anhängefahrzeug so lange gebremst bleiben, bis der Ankuppelvorgang sicher abgeschlossen ist und keine Gefahr mehr besteht.

Zur Lösung der Aufgabe weist eine erfindungsgemäße Ventilanordnung die Merkmale des Anspruchs 1 auf. Zusätzlich zur ersten Ventileinrichtung zum Be- und Entlüften des Federspeichers für die Betätigung der Bremsen ist eine zweite Ventileinrichtung zwischen Federspeicher und erster Ventileinrichtung vorgesehen. Die zweite Ventileinrichtung enthält ein elektrisch ansteuerbares Federventil mit mindestens zwei möglichen Zuständen, wobei das Federventil im ersten, elektrisch angesteuerten Zustand pneumatisch durchgängig ist und so eine pneumatische Verbindung zwischen Federspeicher und erster Ventileinrichtung zulässt oder unterstützt, und im zweiten, federrückgeführten Zustand eine Entlüftung des Federspeichers zulässt oder unterstützt und keine pneumatische Verbindung zur ersten Ventileinrichtung besteht.

Als Federventil im Sinne der Erfindung wird ein Ventil verstanden, welches durch die Wirkung einer Feder danach strebt einen stabilen, federrückgeführten Zustand einzunehmen. Durch Zufuhr elektrischer Energie nimmt das Federventil gegen die Wirkung der Feder einen anderen Zustand ein, welcher hier als erster, elektrisch angesteuerter Zustand bezeichnet wird.

Durch die zweite Ventileinrichtung mit dem Federventil ist ein Belüften des Federspeichers nur möglich, wenn das Federventil mit elektrischer Energie versorgt wird, also bestromt ist. Entsprechend kann beispielsweise beim Ankuppeln des Anhängefahrzeugs an das Zugfahrzeug die Parkbremse erst gelöst werden, wenn die elektrische Verbindung bzw. der ABS-Stecker zwischen Anhängefahrzeug und Zugfahrzeug gesteckt ist. Bei gebremstem Zugfahrzeug wird automatisch auch das Anhängefahrzeug gebremst bzw. ein Lösen der Bremsen durch die elektronische Steuerung verhindert. Ein Zustand, bei dem keine elektrische Verbindung zwischen Zugfahrzeug und Anhängefahrzeug besteht und außerdem die Federspeicher belüftet werden, ist mit der erfindergemäßen Anordnung nicht mehr möglich. Beim Abkuppeln des Anhängefahrzeugs wird nach Trennung der elektrischen Verbindung sofort eine Entlüftung der Federspeicher des Anhängefahrzeugs möglich oder eingeleitet.

Erfindungsgemäß kann das Federventil einen Ausgang aufweisen, welcher zur Atmosphäre offen ist. Alternativ oder zusätzlich kann der genannte Ausgang zum Anschluss an drucklose oder nicht-druckhaltende Bestandteile des elektropneumatischen Bremssystems vorgesehen sein. Über den genannten Ausgang des Federventils soll eine Entlüftung des Federspeichers möglich sein.

Vorteilhafterweise ist das Federventil ein 3/2-Wegeventil. Derartige Ventile sind Standardkomponenten ohne besondere Schwierigkeiten in der Herstellung und Anwendung.

Nach einem weiteren Gedanken der Erfindung ist zwischen der zweiten Ventileinrichtung und dem Federspeicher eine dritte Ventileinrichtung angeordnet, welche ein Impulsventil mit mindestens zwei möglichen Zuständen enthält, wobei das Impulsventil im ersten Zustand (auch als "unlocked" bezeichnet) den Federspeicher mit einer Leitung zur Umgehung der zweiten Ventileinrichtung verbindet, und im zweiten Zustand (auch als "locked" bezeichnet) den Federspeicher mit einer zur zweiten Ventileinrichtung führenden Leitung verbindet.

Als Impulsventil im Sinne der Erfindung wird ein Ventil verstanden, welches impulsgesteuert wenigstens zwei Zustände einnehmen kann und den jeweiligen Zustand beibehält, bis ein neuer Impuls eintrifft, analog einer Flip-Flop-Schaltung. Im Gegensatz dazu fällt das Federventil bei Unterbrechen seiner Stromversorgung in seinen Ruhezustand zurück.

Durch die erfindungsgemäße Kombination aus erster Ventileinrichtung, zweiter Ventileinrichtung mit Federventil und dritter Ventileinrichtung mit Impulsventil vor dem Federspeicher ist eine noch höhere Sicherheit bei automatischer Erkennung des An- und Abkuppelns gegeben. Bei Fahrzeugstillstand verbindet das Impulsventil den Federspeicher mit dem Federventil. Das Federventil ist bestromt und verbindet den Federspeicher mit dem Anhängerbremsventil bzw. Parklöseventil und über dieses mit dem Druckluftvorrat. Bei Stromausfall, etwa beim Abkuppeln des ABS-Steckers/der elektrischen Verbindung, verbindet das Federventil den Federspeicher mit einer Entlüftung. Das Anhängefahrzeug wird gebremst.

In Fahrt verbindet das Impulsventil den Federspeicher mit dem Anhängerbremsventil/Parklöseventil. Das Federventil ist in dieser Stellung ohne Funktion. Ein Stromausfall bei Fahrt führt nicht zu einer Vollbremsung über die Federspeicher. Es kann über die Betriebsbremse kontrolliert abgebremst werden.

Das Anhängefahrzeug befindet sich beim Parken und beim Ankuppeln immer in einem gebremsten Zustand. Die Funktion arbeitet automatisch im Hintergrund, für den Fahrer entstehen dadurch keine Komfort-Einbußen.

Vorteilhafterweise ist das Impulsventil ein 3/2-Wegeventil. Wie schon im Zusammenhang mit dem Federventil erwähnt, handelt es sich um eine technisch ausgereifte und erprobte Bauart eines Ventils.

Die drei genannten Ventileinrichtungen oder wenigstens zwei davon können in einem gemeinsamen Gehäuse angeordnet und in eine gemeinsame Einheit integriert sein. Der Gesamtaufwand wird dadurch minimiert. Zur Ergänzung bestehender elektropneumatischer Bremssysteme in Anhängefahrzeugen ist eine Integration bzw. Zusammenfassung der zweiten und dritten Ventilanordnung mit Federventil und Impulsventil in einem gemeinsamen Gehäuse vorteilhaft.

Nach einem weiteren Gedanken der Erfindung ist der Ventilanordnung ein Steuergerät zugeordnet zur Ansteuerung der Ventileinheiten, zumindest der zweiten und dritten Ventileinheit, und unter Verwendung von die Geschwindigkeit des Fahrzeugs repräsentierenden Daten, wobei das Steuergerät das Impulsventil zum Schalten vom zweiten Zustand (locked) in den ersten Zustand (unlocked) bei Überschreiten einer ersten Grenzgeschwindigkeit ansteuert. Die erste Grenzgeschwindigkeit kann im Steuergerät abgelegt sein und wird mit der aktuellen Geschwindigkeit verglichen. Vorzugsweise liegt diese erste Grenzgeschwindigkeit zwischen 5 km/h und 20 km/h, insbesondere bei etwa 10 km/h. Sobald das Anhängefahrzeug eine Mindestgeschwindigkeit, zum Beispiel die erste Grenzgeschwindigkeit, erreicht hat, wird die Funktion des Federventils (mehr Sicherheit beim An- und Abkuppeln) nicht mehr benötigt und kann umgangen werden. Dies geschieht durch das beschriebene Umschalten des Impulsventils vom zweiten Zustand (locked) in den ersten Zustand (unlocked).

Beim Anfahren aus dem Stillstand befindet sich das Federventil zunächst im elektrisch angesteuerten, bestromten Zustand, welcher auch als "voltaged" bezeichnet wird. Parallel zum Schalten des Impulsventils beim Überschreiten der ersten Grenzgeschwindigkeit kann auch das Federventil umschalten durch Beendigung der elektrischen Ansteuerung. Das Federventil ist dann unbestromt. Entsprechend wird dieser neue Zustand auch als "not voltaged" bezeichnet. Im Normalfall hat die Umsteuerung des Federventils in dieser Phase keine Auswirkung, da durch den nun eingenommenen ersten Zustand des Impulsventils das Federventil umgangen wird. Im Fehlerfall, nämlich bei nicht ausgeführter Umsteuerung des Impulsventils vom zweiten in den ersten Zustand ergibt sich aber eine zusätzliche Sicherheitsfunktion. Fehlerhafterweise bleibt das Impulsventil im zweiten Zustand. Dadurch bleibt der Federspeicher in Verbindung mit dem Federventil. Sobald Letzteres nach Überschreiten der ersten Grenzgeschwindigkeit nicht mehr bestromt wird, entlüftet der Federspeicher über das Federventil und das Fahrzeug wird abgebremst. Diese Bremsung erfolgt beim Anfahren, also bei sehr niedriger Geschwindigkeit, und ist damit unkritisch.

Vorteilhafterweise ist vorgesehen, dass das Steuergerät das Federventil nach Ablauf einer definierten Zeitspanne nach dem Ansteuern des Impulsventils oder bei Überschreiten einer zweiten Grenzgeschwindigkeit, welche höher ist als die erste Grenzgeschwindigkeit, nicht mehr elektrisch ansteuert, so dass das Federventil dann vom ersten Zustand "voltaged" in den zweiten Zustand "not voltaged" wechselt. Bei der definierten Zeitspanne kann es sich vorzugsweise um 0,5 bis 5 Sekunden, insbesondere um etwa eine Sekunde handeln. Sofern als Kriterium eine zweite Grenzgeschwindigkeit verwendet wird, ist diese um 1 bis 5 km/h höher als die erste Grenzgeschwindigkeit, insbesondere etwa 2 km/h.

Beim Abbremsen oder Anhalten des Anhängefahrzeugs werden die genannten Ventileinheiten bzw. Ventile analog, nämlich in umgekehrter Weise wie beim Anfahren angesteuert.

Gegenstand der Erfindung ist auch ein Steuergerät zum Ansteuern einer erfindungsgemäßen Ventilanordnung.

Weiterhin Gegenstand der Erfindung ist ein elektropneumatisches Bremssystem für ein Anhängefahrzeug mit einer erfindungsgemäßen Ventilanordnung.

Weiterhin Gegenstand der Erfindung ist ein Anhängefahrzeug mit einem erfindungsgemäßen elektropneumatischen Bremssystem.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine funktionelle Darstellung der erfindungsgemäßen Ventilanordnung "in Fahrt" und oberhalb einer definierten Geschwindigkeitsschwelle bzw. Grenzgeschwindigkeit,
- Fig. 2: die Ventilanordnung gemäß Figur 1 unterhalb der Grenzgeschwindigkeit oder im Stillstand, nach durch ein elektronisches Steuergerät erkannter Beendigung eines Ankuppelvorgangs,
- Fig. 3: die Ventilanordnung gemäß Figur 1 "bei Stillstand" des Anhängefahrzeugs und bei getrennter elektrischer Verbindung zum Zugfahrzeug.

Eine Ventilanordnung beinhaltet im vorliegenden Beispiel ein Impulsventil 10, ein Federventil 11 und ein Anhängerbremsventil 12 mit Parkbremsbedienung, welches auch als Park-Löse-Sicherheitsventil bezeichnet und als PREV für Park-Release-Emergency-Valve abgekürzt wird. Das Impulsventil 10 ist auf einer Seite über eine Leitung 13 mit einem Federspeicher 14 verbunden, so dass Letzterer entlüftet oder belüftet werden kann. Der Federspeicher 14 dient zur Betätigung einer nicht gezeigten Parkbremse.

Die Ventilanordnung ist Teil eines elektropneumatischen Bremssystems in einem Anhängefahrzeug, insbesondere einem Sattelauflieger oder Deichsel-Anhänger. Dabei wird vorzugsweise davon ausgegangen, dass das Bremssystem gesetzeskonform ausgelegt ist mit einer elektrischen Steckverbindung nach ISO 7638, einer pneumatischen Steckverbindung für einen Bremskreis einer Betriebsbremse und einer pneumatischen Steckverbindung für einen Vorratskreis. Impulsventil 10 und Federventil 11 sind 3/2-Wegeventile, werden elektrisch angesteuert und sind hierzu mit einem nicht gezeigten Steuergerät, insbesondere mit einem Bremsensteuergerät elektrisch verbunden.

Eingangsseitig ist das Impulsventil 10 über eine pneumatische Leitung 15 mit einem Ausgang des Federventils 11 und über eine pneumatische Leitung 16 mit einer pneumatischen Leitung 17 verbunden, welche einen Eingang des Federventils 11 mit einem Ausgang des PREV 12 verbindet. Die Leitung 16 stellt somit eine Umgehung des Federventils 11 dar.

Neben der Leitung 17 ist das Federventil 11 eingangsseitig außerdem mit einer offenen Leitung 18 verbunden. "Offen" bedeutet in diesem Fall, dass Druckluft über die Leitung 18 in die Atmosphäre entweichen kann, alternativ in drucklose oder nicht-druckhaltende Bereiche des Bremssystems.

Eingangsseitig ist das PREV 12 über eine pneumatische Leitung 19 mit einem Vorratsdruckanschluss 20 verbunden, welcher zur Verbindung mit einem nicht gezeigten korrespondierenden Stecker an einem Zugfahrzeug vorgesehen ist und dem Vorratskreis zugeordnet ist. Üblicherweise und/oder aufgrund gesetzlicher Vorschriften sind Stecker und Vorratsdruckanschluss rot gekennzeichnet. Neben der eingangsseitigen Leitung 19 und der ausgangsseitigen Leitung 17 sind an das PREV 12 weitere, hier aber nicht gezeigte Leitungen angeschlossen, da diese bekannt und für das Prinzip der vorliegenden Erfindung von untergeordneter Bedeutung sind.

Das PREV 12 hat in Verbindung mit dem Federspeicher 14 wichtige Funktionen. Sichergestellt werden soll eine möglichst lange Aufrechterhaltung der Bremsfunktionen und des Vorratsdrucks auch bei Abriss einer der pneumatischen Verbindungen. Außerdem soll bei abgekuppeltem Anhängefahrzeug kein Druck entweichen. Bei abgekuppeltem Fahrzeug erfolgt eine automatische Bremsung über die Betriebsbremse. Über einen nicht gezeigten Betätigungsknopf am PREV 12 kann die Betriebsbremse bei abgestelltem Fahrzeug manuell gelöst werden, solange ausreichender Vorratsdruck im Vorratskreis bzw. in einem zugehörigen Vorratsbehälter vorhanden ist.

Bei Abfall des Vorratsdruckes übernehmen Federspeicher 14 und Parkbremse automatisch die Bremswirkung und sichern das Fahrzeug gegen Wegrollen. Zusätzlich kann mit einem nicht gezeigten Betätigungsknopf am PREV 12 die Parkbremse durch Entlüften der Federspeicher 14 eingelegt und auch wieder gelöst werden.

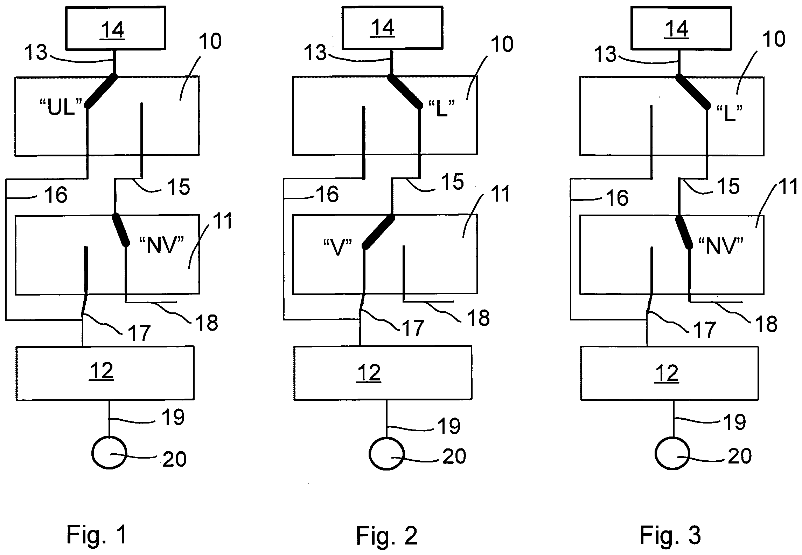

Durch die zusätzlich angeordneten Ventile 10, 11 sind zusätzliche Funktionen realisiert:
Das Federventil 11 ist durch das nicht gezeigte Steuergerät zwischen einem ersten, bestromten Zustand und einem zweiten, unbestromten, federrückgeführten Zustand hin und her schaltbar, je nach anliegender Spannung. In den Fig. 1 bis 3 ist der bestromte erste Zustand als "V" für "voltaged" bezeichnet, analog der zweite, unbestromte Zustand als "NV" für "not voltaged".

Das Impulsventil 10 ist ebenfalls durch das Steuergerät zwischen einem ersten Zustand und einem zweiten Zustand hin und her schaltbar. Der erste Zustand ist in den Fig. 1 bis 3 mit "UL" für "unlocked" bezeichnet, analog der zweite Zustand mit "L" für "locked". Die Bezeichnung des zweiten Zustandes als "locked" bedeutet hier, dass die pneumatische Verbindung zwischen dem PREV 12 und dem Federspeicher 14 durch das Impulsventil 10 zwingend über das Federventil 11 geführt ist. Demgegenüber wird das Federventil 11 im Zustand "unlocked" des Impulsventils 10 umgangen, nämlich über die oben genannte Leitung 16.

Sofern sich ein mit der gezeigten Ventilanordnung ausgestattetes Anhängefahrzeug in Fahrt und oberhalb einer definierten Grenzgeschwindigkeit befindet, sollen die Ventile 10, 11 die Zustände gemäß Fig. 1 einnehmen. Das Impulsventil 10 ist dann "unlocked", während das Federventil 11 "not voltaged" sein soll. Dies hat zur Folge, dass der Federspeicher 14 über das Impulsventil 10 und die Leitung 16 unter Umgehung des Federventils 11 mit dem PREV 12 verbunden ist. In diesem Fahrzustand könnte das Federventil 11 auch den Zustand "voltaged" gemäß Fig. 2 einnehmen. Vorteilhaft ist aber die Konfiguration gemäß Fig. 1. Die Gründe hierfür werden weiter unten näher erläutert.

Bei Unterschreiten der genannten Grenzgeschwindigkeit, welche bei etwa 10 km/h liegt, schaltet das Steuergerät die Ventile 10, 11 in die in Fig. 2 dargestellten Zustände, also "locked" und "voltaged". Dadurch sind Federspeicher 14 und Impulsventil 10 nur noch über das Federventil 11 mit dem PREV 12 verbunden. Damit ist die Funktion des Federventils 11 "scharf geschaltet". Bei Abriss der elektrischen Verbindung oder einer absichtlichen Trennung derselben wird das Federventil 11 nicht mehr bestromt und fällt automatisch in den Zustand "not voltaged" gemäß Fig. 3. Dadurch wird der Federspeicher 14 über die Ventile 10, 11 und die Leitungen 13, 15, 18 entlüftet und die Parkbremse ist wirksam. Das Anhängefahrzeug ist gegen Wegrollen gesichert, und zwar auch beim nächsten Ankuppeln. Die Federspeicher bleiben so lange entlüftet und somit in Bremsstellung, bis die elektrische Verbindung zum Zugfahrzeug hergestellt ist, die Zündung am Zugfahrzeug eingeschaltet ist und vom Zugfahrzeug Betriebsbremsdruck kommt oder auf andere Weise das Ende des Ankuppelvorgangs erkannt wird. Ein Verbinden des Vorratsdruckanschlusses 20 mit dem korrespondierenden Stecker am Zugfahrzeug führt nicht automatisch zur Belüftung des Federspeichers und damit zum Lösen der Parkbremse.

Voranstehend wurden die Funktionen der verschiedenen Teile der Ventilanordnung im Zusammenhang mit einer Verringerung der Geschwindigkeit des Anhängefahrzeugs erläutert. Ausgehend vom abgestellten Anhängefahrzeug mit einem Zustand der Ventilanordnung gemäß Fig. 3, über das stillstehende aber in Betrieb befindliche Anhängefahrzeug gemäß Fig. 2 bis hin zum fahrenden Anhängefahrzeug gemäß Fig. 1, ergibt sich eine umgekehrte Reihenfolge in der Umschaltung der verschiedenen Funktionen.

Von Bedeutung in diesem Zusammenhang ist noch der Übergang vom Zustand gemäß Fig. 2 zum Fahrzustand gemäß Fig. 1. "Stillstand" gemäß Fig. 2 beinhaltet auch eine niedrige Geschwindigkeit unterhalb der definierten Grenzgeschwindigkeit. Bei Überschreiten der Grenzgeschwindigkeit erhält das Impulsventil 10 durch das Steuergerät einen Impuls und schaltet in den Fahrzustand "unlocked" gemäß Fig. 1 um. Unmittelbar oder kurze Zeit danach gelangt das Federventil 11 durch das Steuergerät vom Zustand "voltaged" gemäß Fig. 2 in den Zustand "not voltaged" gemäß Fig. 1. "Kurze Zeit danach" kann auch bedeuten, dass eine zweite Grenzgeschwindigkeit oberhalb der ersten Grenzgeschwindigkeit überschritten sein muss. Vorzugsweise schaltet das Federventil 11 innerhalb von einer Sekunde nach dem Impulsventil 10 oder bei etwa 2 km/h höherer zweiter Grenzgeschwindigkeit.

Sobald beim Beschleunigen des Anhängefahrzeugs das Federventil 11 den Zustand "not voltaged" gemäß Fig. 1 einnimmt, besteht eine Verbindung zwischen der Leitung 15 und der offen Leitung 18. Falls wider Erwarten das Impulsventil 10 nicht korrekt in den Zustand gemäß Fig. 1 geschaltet hat, sondern weiterhin im Zustand "locked" gemäß den Fig. 2 oder 3 steht, wird der Federspeicher 14 entlüftet und bremst das Anhängefahrzeug ab. Auf diese Weise werden die Funktion des Impulsventils 10 beim Beschleunigen des Anhängefahrzeugs überprüft und notfalls eine Bremsung durch die Federspeicher 14 eingeleitet.

In einem nicht gezeigten, vereinfachten Ausführungsbeispiel ist das Impulsventil 10 nicht vorgesehen, aber die in den Fig. 1 bis 3 gezeigten Komponenten 14, 11 und 12. Die Leitung 15 ist mit der Leitung 13 verbunden und Leitung 16 existiert nicht. In dieser Konfiguration sind zumindest die Übergänge zwischen den Zuständen der Fig. 2 und 3 abgesichert. In diesen Figuren sind das Impulsventil 10 und die Leitung 16 jeweils inaktiv. Beispielsweise entlüftet das Federventil 11 den Federspeicher 14 auch beim Anschließen des Vorratsdruckanschlusses 20 an den Druckluftvorrat so lange, bis das Steuergerät das Ende des Ankuppelvorgangs erkannt hat. Ein Belüften des Federspeichers 14 durch Verbinden des Vorratsdruckanschlusses 20 mit dem Druckluftvorrat ohne bestehende elektrische Verbindung ist ausgeschlossen.

## Patentansprüche

1. Ventilanordnung für ein elektropneumatisches Bremssystem in Anhängefahrzeugen, mit einer ersten Ventileinrichtung zum Be- und Entlüften eines Federspeichers (14) für die Betätigung von Bremsen, mit einer zweitemVentileinrichtung zwischen Federspeicher (14) und erster Ventileinrichtung, wobei die zweite Ventileinrichtung ein elektrisch ansteuerbares Federventil (11) mit mindestens zwei möglichen Zuständen enthält, und wobei das Federventil (11) im ersten, elektrisch angesteuerten Zustand pneumatisch durchgängig ist und so eine pneumatische Verbindung zwischen Federspeicher (14) und erster Ventileinrichtung zulässt oder unterstützt, und im zweiten, federrückgeführten Zustand eine Entlüftung des Federspeichers (14) zulässt oder unterstützt und keine pneumatische Verbindung zur ersten Ventileinrichtung besteht, **dadurch gekennzeichnet, dass** zwischen der zweiten Ventileinrichtung und dem Federspeicher (14) eine dritte Ventileinrichtung angeordnet ist, welche ein Impulsventil (10) mit mindestens zwei möglichen Zuständen enthält, wobei das Impulsventil (10) im ersten Zustand (UL) den Federspeicher (14) mit einer Leitung (16) zur Umgehung der zweiten Ventileinrichtung verbindet, und im zweiten Zustand (L) den Federspeicher (14) mit einer zur zweiten Ventileinrichtung führenden Leitung (15) verbindet.

2. Ventilanordnung nach Anspruch 1, **dadurch gekennzeichnet, dass** das Federventil (11) einen Ausgang (Leitung 18) aufweist, welcher zur Atmosphäre offen ist oder zum Anschluss an drucklose oder nicht-druckhaltende Bestandteile des elektropneumatischen Bremssystems vorgesehen ist.

3. Ventilanordnung nach Anspruch 1 oder 2, **dadurch gekennzeichnet, dass** das Federventil (11) ein 3/2-Wegeventil ist.

4. Ventilanordnung nach Anspruch 1, **dadurch gekennzeichnet, dass** das Impulsventil (10) ein 3/2-Wegeventil ist.

5. Ventilanordnung nach Anspruch 1 oder 4, **gekennzeichnet durch** ein Steuergerät zur Ansteuerung der Ventileinheiten, zumindest zur Ansteuerung der zweiten und dritten Ventileinheit, und unter Verwendung von die Geschwindigkeit des Anhängefahrzeugs repräsentierenden Daten, wobei das Steuergerät das Impulsventil (10) zum Schalten vom zweiten Zustand (L) in den ersten Zustand (UL) bei Überschreiten einer ersten Grenzgeschwindigkeit ansteuert.

6. Ventilanordnung nach Anspruch 5, **dadurch gekennzeichnet, dass** das Steuergerät das Federventil (11) nach Ablauf einer definierten Zeitspanne nach dem Ansteuern des Impulsventils (10) oder bei Überschreiten einer zweiten Grenzgeschwindigkeit, welche höher ist als die erste Grenzgeschwindigkeit, nicht mehr elektrisch ansteuert, so dass das Federventil (11) vom ersten Zustand (V) in den zweiten Zustand (NV) wechselt.

7. Steuergerät ausgelegt zum Ansteuern einer Ventilanordnung nach einem der Ansprüche 1 bis 6.

8. Elektropneumatisches Bremssystem für ein Anhängefahrzeug, mit einer Ventilanordnung nach einem der voranstehenden Ansprüche 1 bis 6 und/oder mit einem Steuergerät nach Anspruch 7.

9. Anhängefahrzeug mit einem elektropneumatischen Bremssystem nach Anspruch 8.

## Claims

1. Valve arrangement for an electropneumatic brake system in trailer vehicles, having a first valve device for pressurizing and venting a spring force accumulator (14) for the actuation of brakes, having a second valve device between the spring force accumulator (14) and the first valve device, the second valve device comprising an electrically actuable spring valve (11) with at least two possible states, and the spring valve (11) being pneumatically passable in the first, electrically actuated state and thus permitting or assisting a pneumatic connection between the spring force accumulator (14) and the first valve device, and, in the second, spring-returned state, permitting or assisting venting of the spring force accumulator (14) and there being no pneumatic connection to the first valve device, **characterized in that** a third valve device is arranged between the second valve device and the spring force accumulator (14), which third valve device comprises an impulse valve (10) with at least two possible states, the impulse valve (10) connecting, in the first state (UL), the spring force accumulator (14) to a line (16) in order to bypass the second valve device and, in the second state (L), connecting the spring force accumulator (14) to a line (15) which leads to the second valve device.

2. Valve arrangement according to Claim 1, **characterized in that** the spring valve (11) has an outlet (line 18) which is open to atmosphere or is provided for connecting to pressureless or non-pressure-retaining constituent parts of the electropneumatic brake system.

3. Valve arrangement according to Claim 1 or 2, **characterized in that** the spring valve (11) is a 3/2-way valve.

4. Valve arrangement according to Claim 1, **characterized in that** the impulse valve (10) is a 3/2-way valve.

5. Valve arrangement according to Claim 1 or 4, **characterized by** a control unit for actuating the valve units, at least for actuating the second and third valve unit, and using data which represent the speed of the trailer vehicle, the control unit actuating the impulse valve (10) in order to switch from the second state (L) into the first state (UL) if a first limit speed is exceeded.

6. Valve arrangement according to Claim 5, **characterized in that** the control unit (11) no longer electrically actuates the spring valve (11) after a defined time period after the actuation of the impulse valve (10) has elapsed or if a second limit speed is exceeded which is higher than the first limit speed, with the result that the spring valve (11) changes from the first state (V) into the second state (NV).

7. Control unit designed for actuating a valve arrangement according to one of Claims 1 to 6.

8. Electropneumatic brake system for a trailer vehicle, having a valve arrangement according to one of the preceding Claims 1 to 6 and/or having a control unit according to Claim 7.

9. Trailer vehicle having an electropneumatic brake system according to Claim 8.

## Revendications

1. Ensemble de soupapes pour un système de freinage électropneumatique dans des remorques, avec un premier dispositif de soupape pour alimenter et purger un accumulateur à ressort (14) pour l'actionnement de freins, avec un deuxième dispositif de soupape entre l'accumulateur à ressort (14) et le premier dispositif de soupape, dans lequel le deuxième dispositif de soupape contient une soupape à ressort (11) à commande électrique avec au moins deux états possibles, et dans lequel la soupape à ressort (11) dans le premier état commandé électriquement présente un passage pneumatique et permet ou accentue ainsi une communication pneumatique entre l'accumulateur à ressort (14) et le premier dispositif de soupape, et dans le deuxième état rappelé par le ressort permet ou accentue une purge d'air de l'accumulateur à ressort (14) et il n'existe aucune communication pneumatique vers le premier dispositif de soupape, **caractérisé en ce qu'**il se trouve entre le deuxième dispositif de soupape et l'accumulateur à ressort (14) un troisième dispositif de soupape, qui comporte une soupape à impulsions (10) avec au moins deux états possibles, dans lequel la soupape à impulsions (10) dans le premier état (UL) relie l'accumulateur à ressort (14) à une conduite (16) pour contourner le deuxième dispositif de soupape, et dans le deuxième état (L) relie l'accumulateur à ressort (14) à une deuxième conduite (15) menant au deuxième dispositif de soupape.

2. Ensemble de soupapes selon la revendication 1, **caractérisé en ce que** la soupape à ressort (11) présente une sortie (conduite 18), qui est ouverte vers l'atmosphère ou qui est prévue pour un raccordement à des composants du système de freinage électropneumatique sans pression ou ne retenant pas la pression.

3. Ensemble de soupapes selon la revendication 1 ou 2, **caractérisé en ce que** la soupape à ressort (11) est une soupape à 3/2 voies.

4. Ensemble de soupapes selon la revendication 1, **caractérisé en ce que** la soupape à impulsions (10) est une soupape à 3/2 voies.

5. Ensemble de soupapes selon la revendication 1 ou 4, **caractérisé par** un appareil de commande pour commander les unités de soupape, au moins pour commander la deuxième et la troisième unités de soupape, et avec utilisation de données représentant la vitesse de la remorque, dans lequel l'appareil de commande actionne la soupape à impulsions (10) pour commuter du deuxième état (L) au premier état (UL) en cas de dépassement d'une première vitesse limite.

6. Ensemble de soupapes selon la revendication 5, **caractérisé en ce que** l'appareil de commande ne commande plus électriquement la soupape à ressort (11) après expiration d'un laps de temps déterminé après la commande de la soupape à impulsions (10) ou en cas de dépassement d'une deuxième vitesse limite, de telle manière que la soupape à ressort (11) passe du premier état (V) au deuxième état (NV).

7. Appareil de commande conçu pour commander un ensemble de soupapes selon l'une quelconque des revendications 1 à 6.

8. Système de freinage électropneumatique pour une remorque, avec un ensemble de soupapes selon l'une quelconque des revendications 1 à 6 et/ou avec un appareil de commande selon la revendication 7.

9. Remorque avec un système de freinage électropneumatique selon la revendication 8.
